# EUROPEAN PATENT APPLICATION

(11) **EP 4 692 528 A1**
(43) Date of publication of application: **11.02.2026**
(21) Application number: 25191759.7
(22) Date of filing: 25.07.2025
(51) Int. Cl.: F02D 41/00, F02D 41/02, F02D 41/12, F02D 41/18, F02D 41/14, F02D 11/10

(54) **SYSTEM AND METHOD FOR CONTROLLING THE INTAKE AIR AMOUNT DURING FUEL CUT IN AN INTERNAL COMBUSTION ENGINE PROVIDED WITH A CATALYST**

(30) Priority: 09.08.2024 JP 2024134487
(71) Applicant: MAZDA MOTOR CORPORATION, Hiroshima 730-8670 (JP)
(72) Inventor: Bando, Naoki, Hiroshima, 730-8670 (JP); Kuroiwa, Yusuke, Hiroshima, 730-8670 (JP); Kawamura, Takahiro, Hiroshima, 730-8670 (JP); Ohshita, Atsushi, Hiroshima, 730-8670 (JP)
(74) Representative: Müller-Boré & Partner Patentanwälte PartG mbB

(57) **Abstract**

When an accelerator opening degree is equal to or smaller than a predetermined accelerator determination opening degree, a control device implements a fuel cut that stops fuel injection by a fuel supply device 11; and when the fuel cut is implemented while a catalyst temperature is equal to or higher than a predetermined determination temperature, the control device implements an intake air amount increase control that controls an intake air amount adjustment device 22 so that an intake air amount is larger than while the catalyst temperature is lower than the determination temperature, and the control device controls the intake air amount adjustment device 22 so that an increase rate of the intake air amount is slower when the catalyst temperature is high than when the catalyst temperature is low.

## Description

### [Technical Field]

The present invention relates to an engine system, a control method, a control unit and a computer program product.

### [Background Art]

A catalyst device that is provided in an exhaust passage of an engine and purifies exhaust gas deteriorates when exposed to high temperatures. Therefore, in order to maintain good exhaust gas performance of the engine, the catalyst device is required to be prevented from excessively high temperatures.

Patent Literature 1 discloses an engine in which, in order to prevent the catalyst device from excessive temperature rise, the amount of air drawn into the combustion chamber is increased and a large amount of air is introduced into the exhaust passage, therefore into the catalyst device, to cool the catalyst device with the air, in a fuel cut that stops fuel supply to the combustion chamber.

### [Citation List]

### [Patent Literature]

[Patent Literature 1] Japanese Patent Laid-Open No. 2004-132185

### [Summary]

### [Problems to be Solved]

As in the above-mentioned Patent Literature 1, deterioration of the catalyst device can be prevented by appropriately cooling the catalyst device. However, when the catalyst device is cooled rapidly while its temperature is high, cracks or the like may occur in the catalyst device, resulting in damage to the catalyst device. The configuration of Patent Literature 1 has room for improvement in this respect, that is, with regard to damage to the catalyst device.

The present invention has been made in view of the above circumstances, and an object thereof is to prevent temperature of a catalyst device from becoming excessively high while preventing damage to the catalyst device.

### [Means for Solving the Problem]

The invention is defined in independent claims. Particularly, an engine system or control unit of an engine is provided in a vehicle including an accelerator pedal. The engine system or the control device includes: an engine body including a combustion chamber; an exhaust passage and an intake passage each connected to the engine body; a fuel supply device that supplies fuel to the combustion chamber; an intake air amount adjustment device that adjusts an intake air amount that is an amount of air drawn into the combustion chamber; a catalyst device provided in the exhaust passage to purify exhaust gas; a catalyst temperature obtaining device that obtains a catalyst temperature that is a temperature of the catalyst device; an accelerator opening degree detection device that detects an accelerator opening degree, the accelerator opening degree being an opening degree of the accelerator pedal; and a control unit that controls the fuel supply device and the intake air amount adjustment device. When the accelerator opening degree detected by the accelerator opening degree detection device is equal to or smaller than a predetermined accelerator determination opening degree, the control unit implements a fuel cut that stops fuel injection by the fuel supply device.

Further particularly, when the fuel cut is implemented while the catalyst temperature obtained by the catalyst temperature obtaining device is equal to or higher than a predetermined determination temperature, the control unit is configured to implement an intake air amount increase control to control the intake air amount adjustment device so that the intake air amount is increased, and the control unit is configured to control the intake air amount adjustment device so that an increase rate of the intake air amount is slower as the catalyst temperature becomes higher.

Further particularly, the control unit is configured to implement the intake air amount increase control to control the intake air amount adjustment device so that an intake air amount when the catalyst temperature is equal to or higher than the determination temperature is larger than an intake air amount when the catalyst temperature is lower than the determination temperature.

Further particularly, when the fuel cut is implemented while the catalyst temperature obtained by the catalyst temperature obtaining device is equal to or higher than a predetermined determination temperature, the control unit implements an intake air amount increase control that controls the intake air amount adjustment device so that the intake air amount is larger than while the catalyst temperature is lower than the determination temperature, and the control unit controls the intake air amount adjustment device so that an increase rate of the intake air amount is slower when the catalyst temperature is high than when the catalyst temperature is low.

According to the present invention, when the catalyst temperature is equal to or higher than the determination temperature, the intake air amount increase control is implemented that increases the amount of air in the combustion chamber, therefore the amount of air introduced into the exhaust passage, during the fuel cut. Therefore, the timing of the fuel cut can be used to cool the catalyst device in the exhaust passage with a large amount of air, preventing the temperature of the catalyst device from becoming excessively high.

Furthermore, when the intake air amount is increased in accordance with the implementation of intake air amount increase control at the catalyst temperatures equal to or higher than the determination temperature, the increase rate of the intake air amount is made slower when the catalyst temperature is high than when the catalyst temperature is low. Therefore, when the temperature of the catalyst device is high, and the catalyst device is likely to be cooled by air due to the large temperature difference between the catalyst device and the air, a large amount of air is prevented from being introduced into the catalyst device in a short time. This makes it possible to prevent a rapid drop in the temperature of the catalyst device, and therefore to prevent damage such as cracks in the catalyst device caused by the temperature drop. In contrast, when the temperature of the catalyst device is relatively low and the temperature drop of the catalyst device is kept relatively small, a large amount of air is introduced into the catalyst device to appropriately cool the catalyst device and prevent the temperature of the catalyst device from becoming excessively high.

A configuration to increase the intake air amount when the intake air amount increase control is implemented may include a configuration such that at a time of implementing the fuel cut, the control unit prohibits the intake air amount increase control when a predetermined prohibiting condition is met, and the control unit starts the intake air amount increase control to increase the intake air amount when the prohibiting condition is not met.

This configuration makes it possible to prevent damage to the catalyst device when the intake air amount is increased as the prohibiting condition is not met.

For example, in the configuration, at a time of implementing the fuel cut, the control unit controls the intake air amount adjustment device when decreasing the intake air amount so that a reduction rate of the intake air amount is faster when the catalyst temperature is high than when the catalyst temperature is low. Particularly, the control unit controls the intake air amount adjustment device when decreasing the intake air amount so that a reduction rate of the intake air amount is faster as the catalyst temperature becomes higher.

If the catalyst temperature is equal to or higher than the determination temperature and the fuel cut is implemented, and if the reduction rate of the intake air amount is slow, the amount of air flowing into the catalyst device increases, which may disadvantageously cause the temperature of the catalyst device to drop rapidly. In contrast, in the above configuration, if the catalyst temperature is equal to or higher than the determination temperature and the fuel cut is implemented, the reduction rate of the intake air amount is made faster when the catalyst temperature is high than when the catalyst temperature is low, and the amount of air flowing into the catalyst device is then reduced earlier. This makes it possible to prevent a rapid temperature drop of the catalyst device, and prevent damage to the catalyst device. When the catalyst temperature is relatively low and the catalyst device is unlikely to be damaged, the temperature of the catalyst device can be dropped early by a large amount of air.

For example, in the configuration, at a time of not implementing the fuel cut, the control unit restricts the intake air amount to a predetermined upper limit intake air amount or less by the intake air amount adjustment device when the catalyst temperature is equal to or higher than the determination temperature.

With this configuration, when the fuel cut is not implemented and the catalyst temperature is equal to or higher than the determination temperature, the intake air amount is prevented from exceeding the upper limit intake air amount, and the combustion energy generated in the combustion chamber is kept small. This prevents the catalyst temperature from becoming excessively high. However, if opportunities to restrict the intake air amount increases, opportunities to restrict engine output increases, which may deteriorate driving performance of the vehicle. In contrast, in the present invention, since the catalyst device is cooled when the fuel cut is implemented as described above, the opportunities can be reduced in which the catalyst temperature becomes excessively high when the fuel cut is not implemented. This makes it possible to prevent the catalyst temperature from becoming excessively high while preventing decrease in driving performance.

In the above configuration, a throttle valve that is provided in the intake passage, and opens and/or closes the intake passage may be used as the intake air amount adjustment device.

### [Advantageous Effect]

As described above, the control device of an engine of the present invention can prevent the temperature of the catalyst device from becoming excessively high while preventing damage to the catalyst device.

### [Brief Description of Drawings]

FIG. 1 is a schematic configuration diagram of an engine system according to an embodiment of the present invention.
FIG. 2 is a graph showing a relationship between air-fuel ratios and an RO2 output voltages.
FIG. 3 is a diagram showing control blocks of an engine.
FIG. 4 is a time chart for describing an outline of deterioration diagnosis of a rear O2 sensor.
FIG. 5 is a flowchart showing a procedure for setting a catalyst protection flag.
FIG. 6 is a flowchart showing contents of a control implemented by a PCM.
FIG. 7 is a flowchart showing contents of non-FC-time throttle control.
FIG. 8 is a flowchart showing contents of a non-FC-time fuel injection control.
FIG. 9 is a time chart showing time change of each parameter in a fuel cut.
FIG. 10 is a time chart showing time change of each parameter in a fuel cut.

### [Mode for Carrying Out the Invention]

### (Overall configuration of engine system)

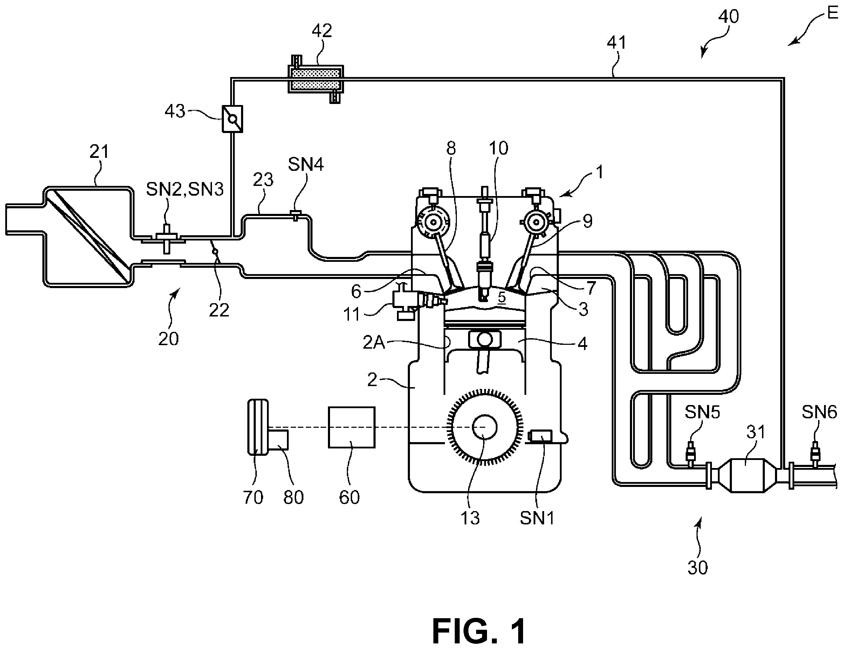

FIG. 1 is a schematic configuration diagram showing an embodiment of an engine system E according to the present invention. A control device of an engine according to the present invention may also be applied to the engine system E.

The engine system E includes an engine body 1 that is driven by receiving a supply of fuel, and an intake passage 20 and an exhaust passage 30 that are connected to the engine body 1. The intake passage 20 is a passage through which intake air, which is the air introduced into the engine body 1, flows. The exhaust passage 30 is a passage through which exhaust gas exhausted from the engine body 1 flows. The engine system E is mounted on a vehicle such as an automobile as a power source for driving the vehicle.

The engine body 1 is may be multi-cylinder engine having a plurality of cylinders 2A (only one of which is shown in FIG. 1). For example, in this embodiment, the engine body 1 is a four-cylinder in-line engine, and has four cylinders 2A aligned in a direction perpendicular to the paper surface of FIG. 1. The engine body 1 may be a single cylinder engine.

The engine body 1 may include a cylinder block 2 having one or a plurality of cylinders 2A formed therein, a cylinder head 3 attached to the upper surface of the cylinder block 2 so as to close the upper end openings of the individual cylinders 2A, and one or a plurality of pistons 4 each housed in a cylinder 2A so as to be able to reciprocate and slide.

A combustion chamber 5 may be defined above the piston 4 of each cylinder 2A. Fuel is supplied to the combustion chamber 5 as described below. The supplied air-fuel mixture is burned in the combustion chamber 5, and the piston 4 reciprocates in the up-down direction due to the expansion force caused by the combustion.

For example, a crankshaft 13, which is the output shaft of the engine body 1, is provided at the lower part of the cylinder block 2 (below the piston 4). The crankshaft 13 is connected to the pistons 4 of the individual cylinders 2A via connecting rods. The crankshaft 13 rotates around its central axis in accordance with the reciprocating motion (up and down movement) of the pistons 4.

The vehicle including the engine system E may include e.g., a multi-speed transmission as a transmission 60. The transmission 60 may also be an automatic transmission, and the transmission 60 and the crankshaft 13 may be connected via a torque converter or the like.

For example, the output of the engine body 1 is transmitted to the one or more wheels 70 via the crankshaft 13, torque converter, transmission 60, and the like. In this embodiment, the transmission 60 is a six-speed multi-stage transmission, and forms forward gear stages that is six gear stages with different transmission gear ratios from each other.

A crank angle sensor SN1 may be attached to the cylinder block 2. The crank angle sensor SN1 detects the crank angle, which is the rotation angle of the crankshaft 13, and the engine rotation speed, which is the rotation speed of the crankshaft 13.

In the cylinder head 3, each cylinder 2A may include an intake port 6 and an exhaust port 7 that communicate with a combustion chamber 5. In the cylinder head 3, each cylinder 2A may include an intake valve 8 for opening and/or closing the opening of the intake port 6 on the combustion chamber 5 side, and an exhaust valve 9 for opening and/or closing the opening of the exhaust port 7 on the combustion chamber 5 side.

In the cylinder head 3, each cylinder 2A may be provided with one or more injectors 11, which supply fuel to the combustion chamber 5. For example, the engine body 1 is a gasoline engine, and each injector 11 injects fuel containing gasoline into the combustion chamber 5.

The injector 11 may inject fuel into the combustion chamber 5. The injector 11 may be a side-injection type fuel injection valve, and its head end faces the combustion chamber 5 from the inner peripheral surface of the combustion chamber 5.

In the cylinder head 3, each cylinder 2A may include one or more spark plugs 10, which ignites the air-fuel mixture in the combustion chamber 5. The spark plug 10 is disposed so that its head end, including a spark plug, faces the inside of the combustion chamber 5 from near the center of the ceiling surface of the combustion chamber 5. The injector 11 corresponds to a "fuel supply device" of the present invention.

The intake passage 20 is connected to the cylinder head 3 so as to communicate with the intake ports 6 of the individual cylinders 2A. In the intake passage 20, an air cleaner 21, a throttle valve 22, and a surge tank 23 may be disposed in this order from the upstream side in the flow direction of the intake air.

The air cleaner 21 is a filter that removes foreign matter in the intake air. The throttle valve 22 is a valve that opens and/or closes the intake passage 20.

The amount of intake air flowing through the intake passage 20, and therefore the amount of air drawn into the combustion chamber 5, changes in accordance with the opening degree of the throttle valve 22. The surge tank 23 is a tank that provides a space for evenly distributing intake air to each cylinder 2A. The throttle valve 22 corresponds to an "intake air amount adjustment device" of the present invention.

An air flow sensor SN2, intake air temperature sensor SN3, and/or intake air pressure sensor SN4 may be disposed in the intake passage 20. The air flow sensor SN2 detects the intake air amount, which is the amount of air drawn into the individual combustion chambers 5 through the intake passage 20.

The intake air temperature sensor SN3 detects the intake air temperature, which is the temperature of the air flowing through the intake passage 20. The intake air pressure sensor SN4 detects the intake air pressure, which is the pressure inside the intake passage 20.

The air flow sensor SN2 and the intake air temperature sensor SN3 may be disposed at a neighborhood of or near the air cleaner 21, and/or respectively detect the flow rate and temperature of air passing through the intake passage 20 at the neighborhood of the air cleaner 21. The intake air pressure sensor SN4 may be disposed in the surge tank 23 and/or detects the pressure inside the surge tank 23.

The exhaust passage 30 is connected to the cylinder head 3 so as to communicate with the exhaust ports 7 of the individual cylinders 2A. A catalyst device 31 is disposed in the exhaust passage 30. The catalyst device 31 is a device that includes a catalyst and purifies exhaust gas by using the action of the catalyst.

Catalyst device 31 may have a built-in three-way catalyst. Thus, when the air-fuel ratio of the exhaust gas is at or close to the stoichiometric air-fuel ratio, the catalyst device 31 oxidizes HC (hydrocarbon) and CO (carbon monoxide) while reducing NOx (nitrogen oxides).

Here, the three-way catalyst has a property of absorbing oxygen. Therefore, when a large amount of oxygen is contained in the exhaust gas, the catalyst device 31 absorbs oxygen. In a state in which the amount of absorbed oxygen is large, the catalyst device 31 cannot sufficiently reduce NOx.

A front O2 sensor SN5 and/or a rear O2 sensor SN6 may be disposed in the exhaust passage 30. The front O2 sensor SN5 detects the concentration of oxygen contained in the exhaust gas and the air-fuel ratio. The rear O2 sensor SN6 detects the air-fuel ratio of the exhaust gas.

The front O2 sensor SN5 is attached to a part of the exhaust passage 30 upstream of the catalyst device 31 (in the direction of exhaust gas flow), and detects the oxygen concentration and air-fuel ratio of the exhaust gas flowing into the catalyst device. In this embodiment, the front O2 sensor SN5 is provided near the upstream end of the catalyst device 31.

The rear O2 sensor SN6 is attached to a part of the exhaust passage 30 downstream of the catalyst device 31 (in the direction of exhaust gas flow), and detects the air-fuel ratio of the exhaust gas flowing out from the catalyst device 31. Here, no member capable of changing the air-fuel ratio, such as a catalyst, may be provided between the rear O2 sensor SN6 and the catalyst device 31, and the rear air-fuel ratio detected by the rear O2 sensor SN6 is approximately equal to the air-fuel ratio in the catalyst device 31.

In the following, the air-fuel ratio of the exhaust gas passing through the location where the front O2 sensor SN5 is installed, and the air-fuel ratio of the exhaust gas on the upstream side of the catalyst device 31 may be referred to as a front air-fuel ratio, as appropriate. The air-fuel ratio of the exhaust gas passing through the location where the rear O2 sensor SN6 is installed, and the air-fuel ratio of the exhaust gas on the downstream side of the catalyst device 31 may be called a rear air-fuel ratio.

In the following, high/low air-fuel ratios are referred to as lean/rich as appropriate. For example, when the oxygen ratio of the exhaust gas is high and the air-fuel ratio of the exhaust gas is high, the exhaust gas is referred to as being lean, and the opposite is referred to as being rich.

The front O2 sensor SN5 may be a so-called linear O2 sensor, and/or may output a voltage proportional to the oxygen concentration and air-fuel ratio of the exhaust gas. On the other hand, the rear O2 sensor SN6 may be a so-called λ sensor, and may detect whether the exhaust gas is at a neighborhood of the stoichiometric air-fuel ratio, leaner than the stoichiometric air-fuel ratio, or richer than the stoichiometric air-fuel ratio.

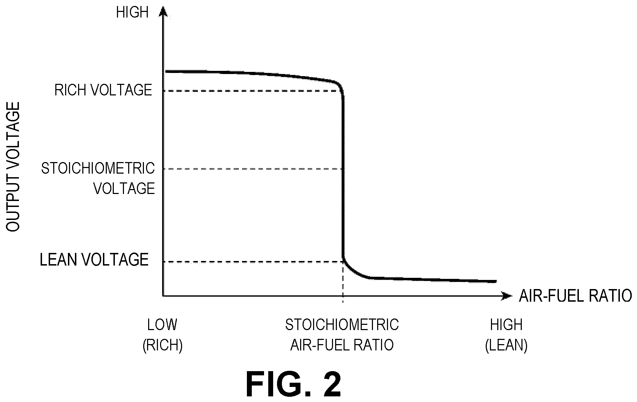

For example, the output voltage of the rear O2 sensor SN6 is as shown in FIG. 2. In the following, the output voltage of the rear O2 sensor SN6 may be referred to as the RO2 output voltage as appropriate. When the air-fuel ratio of the exhaust gas is leaner than the stoichiometric air-fuel ratio, the RO2 output voltage is lower than a predetermined lean voltage. When the air-fuel ratio of the exhaust gas is richer than the stoichiometric air-fuel ratio, the RO2 output voltage is higher than a predetermined rich voltage. When the air-fuel ratio of the exhaust gas is the stoichiometric air-fuel ratio, the RO2 output voltage is a stoichiometric voltage that is higher than the lean voltage and lower than the rich voltage.

Particularly, when the exhaust gas air-fuel ratio transitions from a state leaner than the stoichiometric air-fuel ratio to the stoichiometric air-fuel ratio, the RO2 output voltage increases from a voltage lower than the lean voltage, through the lean voltage, to the stoichiometric voltage. When the exhaust gas air-fuel ratio transitions from a state richer than the stoichiometric air-fuel ratio to the stoichiometric air-fuel ratio, the RO2 output voltage decreases from a voltage higher than the rich voltage, through the rich voltage, to the stoichiometric voltage.

Note that, in this embodiment, the exhaust passage 30 may be a so-called 4-2-1 type exhaust passage. In other words, the exhaust passage 30 is configured such that four exhaust passages extending from the engine body 1 are merged into two, which are then merged into one on the downstream side (in the direction of exhaust gas flow). The catalyst device 31, the front O2 sensor SN5, and the rear O2 sensor SN6 may be all provided downstream of the part where the exhaust passages merge into one.

The engine system E may be provided with an EGR device 40. EGR device 40 includes EGR passage 41. The EGR passage 41 is a passage that connects the exhaust passage 30 and the intake passage 20, and recirculates EGR gas, which is a part of the exhaust gas, to the intake passage 20. For example, the EGR passage 41 connects a part of the exhaust passage 30 downstream of the catalyst device 31 (in the direction of exhaust gas flow) to a part of the intake passage 20 between the throttle valve 22 and the surge tank 23.

The EGR passage 41 may be provided with an EGR cooler 42 and an EGR valve 43. The EGR cooler 42 cools the EGR gas flowing through the EGR passage 41 through heat exchange. The EGR valve 43 is a valve that opens and closes the EGR passage 41.

The amount of EGR gas recirculated to the intake passage 20 is changed in accordance with the opening degree of the EGR valve 43. The EGR valve 43 may be provided in the EGR passage 41, closer to the intake passage 20 than the EGR cooler 42.

### (Control system)

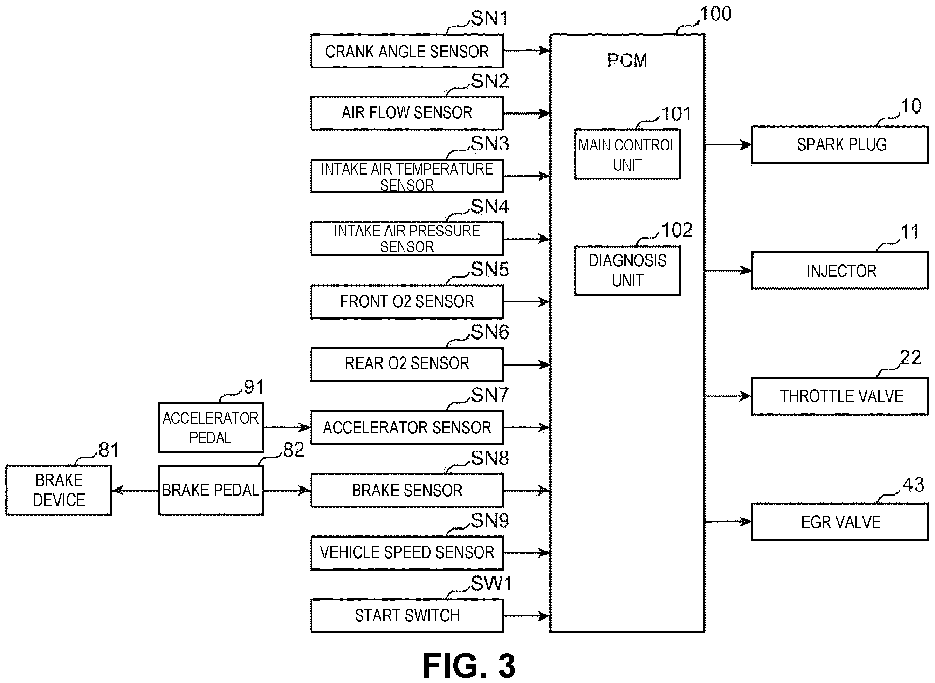

FIG. 3 is a functional block diagram showing the control system of the engine system E. A powertrain control module or a PCM 100 shown in this figure is a device that is mounted on a vehicle and provides overall control of the engine system E. The PCM 100 includes a microcomputer including a processor (CPU) that implements various calculation processes, memories such as ROM and RAM, and various input/output buses. The PCM 100 corresponds to a "control unit" in the present invention.

The PCM 100 may be electrically connected to the crank angle sensor SN1, air flow sensor SN2, intake air temperature sensor SN3, intake air pressure sensor SN4, front O2 sensor SN5, and rear O2 sensor SN6. Information detected by sensors SN1 to SN6 may be input one by one to the PCM 100.

The vehicle including the engine system E includes an accelerator pedal 91 that is depressed by the driver, and an accelerator sensor SN7. The accelerator pedal 91 is an operating device for changing and adjusting the output of the engine body 1 and therefore the vehicle speed. The accelerator sensor SN7 detects the accelerator opening degree, which is the amount of depression of the accelerator pedal 91, that is, the opening degree of the accelerator pedal 91.

For example, the accelerator opening degree may be a parameter that is 0 (%) when the accelerator pedal 91 is not depressed, and is 100 (%) when the depression amount of the accelerator pedal 91 is at its maximum. The accelerator sensor SN7 corresponds to an "accelerator opening degree detection device" of the present invention.

The vehicle includes a brake device 81, a brake pedal 82, and a brake sensor SN8. The brake device 81 is a device that applies a braking force to the one or more wheels 70 to brake the wheels 70.

The brake pedal 82 is an operating device for switching between driving and stopping the brake device 81 and for increasing and decreasing the braking force that the brake device 81 applies to the wheels 70. The brake pedal 82 is depressed by the driver.

The brake sensor SN8 detects: the brake opening degree that is the depression amount of the brake pedal 82, that is, the opening degree of the brake pedal 82; and the operating state of the brake device 81.

The vehicle may include a vehicle speed sensor SN9 for detecting the vehicle speed. The vehicle may be provided with a start switch SW1 that is operated by the driver to start the engine body 1.

For example, when a specified operation is performed on the start switch SW1, the IG is turned on and power is supplied to each part of the engine system E, making it possible to start the engine body 1. Particularly, when a predetermined operation is performed on the start switch SW1 while the IG is turned on, the IG is turned off, the power supply to each part of the engine system E is stopped, and the engine body 1 cannot be started.

Information detected by the accelerator sensor SN7 and brake sensor SN8, and a signal from the start switch SW1 may be input one by one to the PCM 100.

For example, the PCM 100 controls each part of the engine system E while executing various determinations and calculations based on input information from at least one of the sensors SN1 to SN9 and the start switch SW1. The PCM 100 is electrically connected to the spark plug 10, the injector 11, the throttle valve 22, the EGR valve 43, and the like, and outputs control signals to each of these devices based on the results of the above calculations, and the like.

The PCM 100 may functionally include a main control unit 101 and a diagnosis unit 102. The main control unit 101 controls the amount of intake air and the amount of fuel introduced into each combustion chamber 5. The diagnosis unit 102 performs abnormality diagnosis of the engine system E. In this embodiment, the diagnosis unit 102 diagnoses whether the rear O2 sensor SN6 has deteriorated.

### (Fuel cut and basic control in fuel cut)

When fuel cut conditions are met, that is, e.g., the engine rotation speed is higher than a predetermined idle rotation speed and the accelerator opening degree is equal to or smaller than a predetermined accelerator determination opening degree, the PCM 100 (main control unit 101) implements a fuel cut that stops the drive of the injector 11 of each cylinder 2A and stops fuel injection into each combustion chamber 5. The accelerator determination opening degree may be set to 0 (zero), that is, an opening degree close to full closure, and fuel cut is implemented when the accelerator is substantially off in which the accelerator pedal 91 is not depressed.

While fuel cut, except for a time of the intake air amount increase control described below, is implemented, the PCM 100 may control the throttle opening degree to a predetermined normal FC opening degree. The normal FC opening degree is preset to an opening degree that may be close to 0 (zero) or 0, that is, to full closure, and/or an opening degree that is smaller (on the closure side) than the throttle opening degree to be achieved when the fuel cut is not implemented. While fuel cut, except for a time of EGR valve failure diagnosis described below, is implemented, the PCM 100 may fully close the EGR valve 43.

### (Deterioration diagnosis of rear O2 sensor)

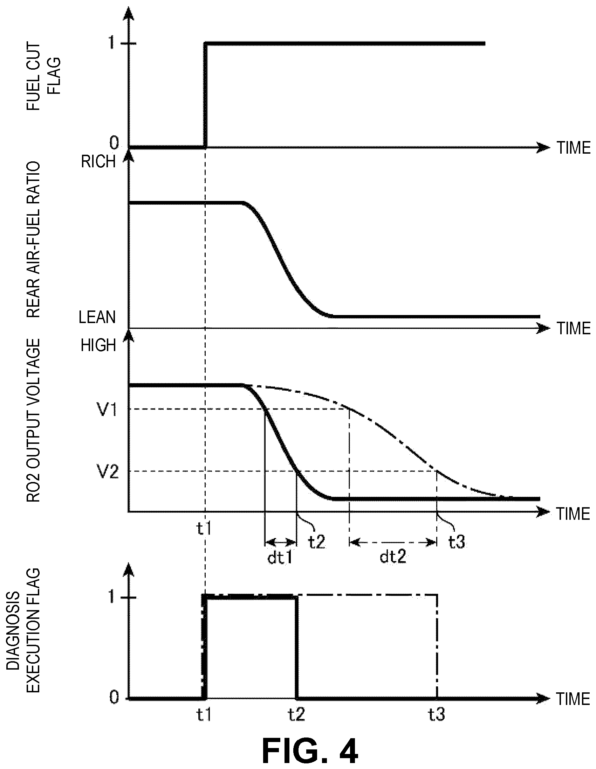

The deterioration diagnosis of the rear O2 sensor SN6 which may be implemented by the PCM 100 (diagnosis unit 102) will be described with reference to FIG. 4. FIG. 4 is a time chart showing the time change of the fuel cut flag, rear air-fuel ratio, RO2 output voltage, and diagnosis execution flag. For example, the fuel cut flag is a flag that is set to 1 when a fuel cut is implemented, as described below, and is set to 0 when a fuel cut is not implemented. The diagnosis execution flag is set to 1 when a deterioration diagnosis of the rear O2 sensor SN6 is executed, and is set to 0 otherwise.

When the fuel cut is not implemented, the air-fuel ratio of the gas in the combustion chamber 5 and the exhaust gas is controlled to be close to the stoichiometric air-fuel ratio. Contrarily, when fuel cut is implemented, the exhaust gas becomes almost air. Therefore, when fuel cut is started, the air-fuel ratio of the exhaust gas becomes significantly leaner (higher) with respect to a neighborhood of the stoichiometric air-fuel ratio, and the RO2 output voltage drops. In the example of FIG. 4, fuel cut is started at time t1, and the RO2 output voltage drops accordingly.

In the graph of FIG. 4, the solid line shows the RO2 output voltage when the rear O2 sensor SN6 does not deteriorate, and the chain line shows the RO2 output voltage when the rear O2 sensor SN6 has deteriorated. As shown in this graph, the response speed of the rear O2 sensor SN6 decreases when it has deteriorated, and the time dt2 that it takes for the RO2 output voltage to drop from a predetermined first voltage V1 to a predetermined second voltage V2 when it has deteriorated is longer than the corresponding time dt1 when it does not deteriorate.

Using the above characteristics, in this embodiment, the rear O2 sensor SN6 is determined to have deteriorated based on the time that it takes for the RO2 output voltage to drop from the predetermined first voltage V1 to the second voltage V2 after fuel cut starts. For example, the PCM 100 implements a deterioration diagnosis of the rear O2 sensor SN6 from the start of fuel cut until the RO2 output voltage drops to the predetermined second voltage V2. The PCM 100 may also obtain the time that it takes for the RO2 output voltage to drop from the first voltage V1 to the second voltage V2 after the fuel cut starts, and may determine that the rear O2 sensor SN6 has deteriorated if the obtained time is longer than a predetermined diagnosis time.

The first voltage V1 may be preset to a value smaller than the stoichiometric voltage and larger than the lean voltage, and may be stored in the PCM 100. The second voltage V2 may be preset to a value smaller than the first voltage V1 and may be stored in the PCM 100.

As described above, in this embodiment, a deterioration diagnosis of the rear O2 sensor SN6 is implemented from the start of fuel cut until the RO2 output voltage drops to the second voltage V2, and the diagnosis execution flag is set to 1 when fuel cut starts and is set to 0 when the RO2 voltage drops to the second voltage V2.

In this embodiment, the number of the deterioration diagnoses of the rear O2 sensor SN6 is limited in one driving cycle. For example, when the number of deterioration diagnoses of the rear O2 sensor SN6 implemented in one driving cycle reaches a predetermined number of determinations, the PCM 100 prohibits subsequent deterioration diagnoses of the rear O2 sensor SN6 until the driving cycle ends.

The number of determinations is preset and stored in the PCM 100. The number of determinations is, for example, 1. The driving cycle is the period from when IG is turned on and the engine body 1 can be started, to when IG is turned off and the engine body 1 cannot be driven.

### (Catalyst protection control)

The following describes the catalyst protection control implemented by the PCM 100 to prevent excessive temperature rise of the catalyst device 31.

### (Catalyst temperature condition)

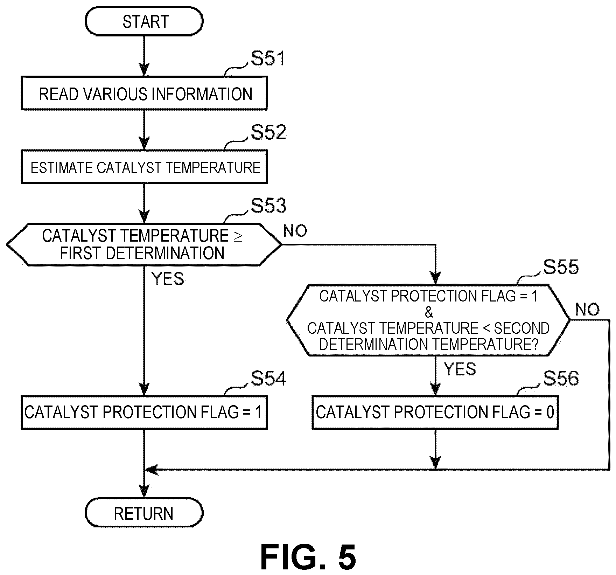

FIG. 5 is a flowchart showing the procedure for calculating the catalyst protection flag. The catalyst protection control is implemented when the catalyst temperature, which is the temperature of the catalyst device 31, is high.

Specifically, catalyst protection control is implemented when the catalyst temperature is equal to or higher than the first determination temperature, and optionally when the catalyst temperature has reached or exceeded the first determination temperature but has not yet dropped below the second determination temperature. The catalyst protection flag may be a flag that indicates whether the condition for implementing this catalyst protection control is met.

Steps S51 to S56 shown in FIG. 5 may be repeatedly implemented at predetermined intervals while IG is turned on. First, the PCM 100 may read various information including the detection values of the sensors SN1 to SN9 (step S51).

In step S51, the PCM 100 may read at least the intake air amount detected by the air flow sensor SN2, the engine rotation speed detected by the crank angle sensor SN1, and the intake air temperature detected by the intake air temperature sensor SN3. Next, the PCM 100 estimates the catalyst temperature, which is the temperature of the catalyst device 31 (step S52).

For example, the PCM 100 estimates the temperature of the exhaust gas based on the intake air amount, engine rotation speed, intake air temperature, the amount of fuel injected from the injector 11, and the like, and estimates the catalyst temperature based on the estimated exhaust gas temperature.

In this embodiment, the PCM 100 obtains the catalyst temperature in this way, and the PCM 100 may correspond to a "catalyst temperature obtaining device" in addition to a "control unit" of the present invention. Alternatively or additionally, a sensor may be used to determine or obtain the catalyst temperature and a corresponding determination result may be provided to the PCM 100.

Next, the PCM 100 determines whether the catalyst temperature estimated in step S52 is equal to or higher than the first determination temperature (step S53). The first determination temperature is preset and stored in the PCM 100. The first determination temperature is set to, for example, 900°C or about 900°C. If the determination in step S53 is YES and the catalyst temperature is equal to or higher than the first determination temperature, the PCM 100 sets the catalyst protection flag to 1 (step S54).

The first determination temperature may be within a range from 900°C to 950°C or a range from about 900°C to about 950°C. When the temperature of the catalyst device 31 is gradually increased, microcracks may start to form at a certain temperature. If the temperature of the catalyst device 31 continuously exceeds such a temperature, there is a risk that the catalyst degrades and reduces its effectiveness. In the worst case, the catalyst device 31 may melt. The temperature at which microcracks occur depends on the physical properties of the catalyst device 31. Such a temperature may be 950°C or about 950°C. Considering the tolerance, sensing variability, and disturbances, 900°C may be a reasonable value as the first determination temperature.

If the determination in step S53 is NO and the catalyst temperature is less than the first determination temperature, the PCM 100 may determines whether the condition is met that the catalyst protection flag is 1 and the catalyst temperature is less than the second determination temperature (step S55). If the determination in step S55 is NO and the catalyst protection flag is 0, or the catalyst temperature is equal to or higher than the second determination temperature, the PCM 100 may end the process (returns to step S51). In other words, the PCM 100 maintains the value of the catalyst protection flag at the current value.

Contrarily, if the determination in step S55 is YES, the catalyst protection flag is 1, and the catalyst temperature is less than the second determination temperature, that is, if the catalyst temperature has reached or exceeded the first determination temperature to set the catalyst protection flag to 1, and then the catalyst temperature has dropped to less than the second determination temperature, the PCM 100 may set the catalyst protection flag to 0 (step S56) and ends the process (returns to step S51).

In this way, if the catalyst temperature is equal to or higher than the first determination temperature or the catalyst temperature has reached or exceeded the first determination temperature and has not yet dropped below the second determination temperature, and the condition for implementing the catalyst protection control is met, the catalyst protection flag is set to 1. In addition, at other times when the condition for implementing the catalyst protection control is not met, the catalyst protection flag is set to 0. The catalyst protection flag is set to 0 when IG is turned off.

The above-described first determination temperature and/or the above-described second determination temperature under the condition that the catalyst temperature has reached or exceeded the first determination temperature correspond to "determination temperatures" of the present invention.

### (Fuel cut control)

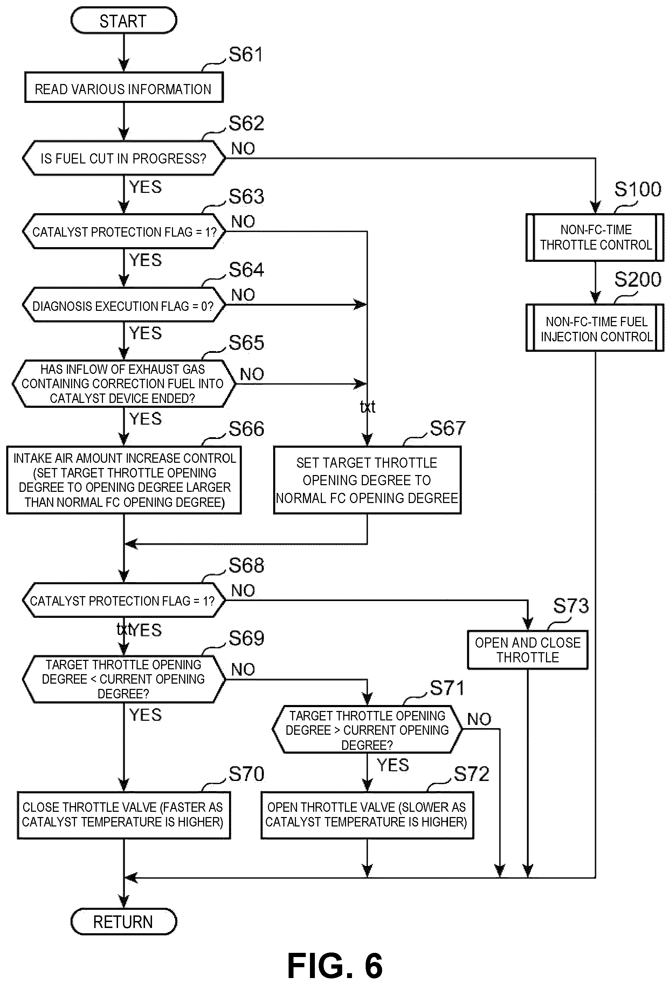

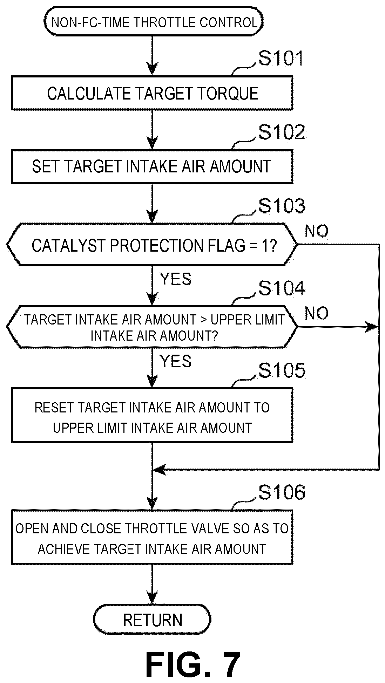

FIG. 6 is a flowchart showing the control implemented by the PCM 100 (main control unit 101) mainly in the fuel cut. Steps S61 to S100 shown in FIG. 7 may be repeatedly implemented at predetermined intervals while IG is turned on.

First, the PCM 100 may read various information including the detection values of sensors SN1 to SN9 (step S61). In step S61, PCM 100 may read at least the engine rotation speed detected by the crank angle sensor SN1 and the accelerator opening degree detected by the accelerator sensor SN7.

Next, the PCM 100 may determine whether the fuel cut is in progress (step S62). For example, the PCM 100 may determine whether the above-described fuel cut condition is met and fuel injection from the injectors 11 of all the cylinders 2A has been stopped.

If the determination in step S62 is NO and the fuel cut is not in progress, the PCM 100 may implement non-FC-time throttle control (step S100). The PCM 100 may also implement non-FC-time fuel injection control (step S200) and then may end the process (returns to step S61).

The non-FC-time throttle control is control of the throttle valve 22 that is implemented in normal operation that is not the fuel cut. The non-FC-time fuel injection control is control of the injector 11 that is implemented in normal operation that is not the fuel cut. The non-FC-time throttle control and the non-FC-time fuel injection control will be described below.

If the determination in step S62 is YES and fuel cut is in progress, the PCM 100 may determine whether the catalyst protection flag is 1 (step S63). Step S63 implements a determination using a catalyst protection flag calculated separately based on the catalyst temperature as described above.

If the determination in step S63 is NO and the catalyst protection flag is 0, the PCM 100 may proceed to step S67. In step S67, the PCM 100 may set the target throttle opening degree that is the target value of the throttle opening degree to the normal FC opening degree. As described above, the normal FC opening degree may be preset to an opening degree close to full closure. After step S67, the PCM 100 may proceed to step S68.

If the determination in step S63 is YES and the catalyst protection flag is 1, the PCM 100 may determine whether the diagnosis execution flag is 0 (step S64). In other words, the PCM 100 determines whether a deterioration diagnosis of the rear O2 sensor SN6 is being implemented.

If the determination in step S64 is NO and the diagnosis execution flag is 1, that is, a deterioration diagnosis of the rear O2 sensor is being implemented, the PCM 100 may proceed to step S67, and set the target throttle opening degree to the normal FC opening, and then proceeds to step S68. Contrarily, for example, if the determination in step S64 is YES and deterioration diagnosis of the rear O2 sensor is not being implemented, the PCM 100 next determines whether the inflow of exhaust gas containing correction fuel into the catalyst device 31 has ended (step S65).

Although details will be described below, in this embodiment, the fuel injection amount is corrected to be increased for a predetermined period after the fuel cut. Step S65 determines whether the inflow of exhaust gas, containing the fuel increased by correction, into the catalyst device 31 has ended.

If the determination in step S65 is NO and the inflow of exhaust gas, containing the fuel increased by correction, into the catalyst device 31 has not yet ended, the PCM 100 may proceed to step S67, set the target throttle opening degree to the normal FC opening degree, and then proceed to step S68. Contrarily, if the determination in step S65 is YES and the inflow of exhaust gas, containing the fuel increased by correction, into the catalyst device 31 has ended, the PCM 100 may proceed to step S66. In step S66, the PCM 100 may implement intake air volume increase control that is one of the catalyst protection controls.

The intake air volume increase control is a control for increasing the intake air amount that is the amount of air drawn into the combustion chamber 5. In step S66, the PCM 100 may set the target throttle opening degree to an opening degree larger (more open) than the normal FC opening degree.

In steps S70 and S71, which will be described below, the throttle valve 22 may be opened and/or closed so as to achieve the target throttle opening degree. Therefore, when the intake air volume increase control is implemented, the intake air amount is increased compared to when the intake air amount increase control is not implemented (when step S67 is implemented). After step S66, the PCM 100 proceeds to step S68.

In step S68, the PCM 100 may determine whether the catalyst protection flag is 1, as in step S63. If the determination in step S68 is YES and the catalyst protection flag is 1, PCM 100 may determine whether the target throttle opening degree set in step S66 or S67 is smaller than the current throttle opening degree (step S69). The current throttle opening degree is obtained based on the drive current of the throttle valve 22 and the output of a throttle valve opening degree sensor that can detect the opening degree of the throttle valve 22.

If the determination in step S69 is YES and the target throttle opening degree is smaller than the current throttle opening degree, the PCM 100 may control the throttle valve 22 to the closing side so that the throttle opening degree becomes the target throttle opening degree (step S70). The throttle valve 22 may be controlled to the closing side or to be closed, and thereby the intake air amount is reduced.

When step S70 is implemented, the PCM 100 drives the throttle valve 22 so that the closing speed of the throttle valve 22 is increased as the catalyst temperature is higher. For example, the closing speed of the throttle valve 22 is increased in proportion to the catalyst temperature.

After step S70, the PCM 100 ends the process (returns to step S61). When the closing speed of the throttle valve 22 is fast, the reduction rate of the intake air amount is also fast. In other words, in step S70, PCM 100 controls the throttle valve 22 so that the reduction rate of the intake air amount increases as the catalyst temperature is higher.

Contrarily, if the determination in step S69 is NO and the target throttle opening degree is equal to or larger than the current throttle opening degree, the PCM 100 may determines whether the target throttle opening degree set in step S66 or S67 is larger than the current throttle opening degree (step S71).

If the determination in step S71 is YES and the target throttle opening degree is larger than the current throttle opening degree, the PCM 100 may control the throttle valve 22 to the opening side or to be opened so that the throttle opening degree reaches the target throttle opening degree (step S72). The throttle valve 22 may be controlled to the opening side or to be opened, and thereby the intake air amount increases.

When step S72 is implemented, the PCM 100 drives the throttle valve 22 so that the opening speed of the throttle valve 22 is slowed as the catalyst temperature is higher. For example, the opening speed of the throttle valve 22 is slowed in proportion to the catalyst temperature.

After step S72, the PCM 100 ends the process (returns to step S61). Note that when the opening speed of the throttle valve 22 is slow, the increase rate of the intake air amount is also fast. In other words, in step S72, PCM 100 controls the throttle valve 22 so that the increase rate of the intake air amount increases as the catalyst temperature is higher.

Note that if the determination in step S71 is NO and the throttle opening degree matches the target throttle opening degree, the PCM 100 controls the throttle valve 22 so as to maintain the current throttle opening degree, and ends the process (returns to step S61).

Returning to step S68, if the determination is NO and the catalyst protection flag is 0, the PCM 100 may opens and/or closes the throttle valve 22 so that the throttle opening degree becomes the target throttle opening degree set in step S66 or step S68 (step S73). Here, in step S73, unlike steps S70 and S71, the opening and/or closing speed of the throttle valve 22 may not be changed depending on the catalyst temperature, and the throttle valve 22 is opened and closed at a predetermined speed that is preset. Note that also in implementing step S73, if the target throttle opening degree and the current throttle opening degree match, the PCM 100 controls the throttle valve 22 so as to maintain that opening degree, and ends the process (returns to step S61).

As described above, for example, if fuel cut is in progress (determination in step S62 is YES) and the catalyst protection flag is 1 (determination in step S63 is YES), and if both of the following conditions are met: the deterioration diagnosis of the rear O2 sensor SN6 is not being implemented and the diagnosis execution flag is 0 (determination in step S64 is YES); and the inflow of exhaust gas containing correction fuel into the catalyst device 31 has ended (determination in step S65 is YES), the intake air amount increase control is implemented and the throttle opening degree is set to a larger opening degree than the normal FC opening degree. Contrarily, if the fuel cut is in progress (determination in step S62 is NO) and the catalyst protection flag is 1 (determination in step S63 is NO), and if either of the above two conditions is not met (if determination in step S64 or S65 is NO), the intake air amount increase control is prohibited and the throttle opening degree is controlled to the normal FC opening degree. Particularly, if the catalyst protection flag is 1, the intake air amount increase control is not implemented, and the throttle opening degree is controlled to the normal FC opening degree.

As a result, if the catalyst protection flag is 1 and the above two conditions are met during fuel cut, the intake air amount is increased compared to when the catalyst protection flag is 0 or when at least one of the above two conditions is not met. Here, the condition that the deterioration diagnosis of the rear O2 sensor SN6 is not being implemented and the condition that the inflow of exhaust gas containing correction fuel into the catalyst device 31 has ended each correspond to a "prohibiting condition" in the present invention.

Particularly, if fuel cut is in progress (determination in step S62 is YES) and the catalyst protection flag is 1 (determination in step S63 is YES), and if the throttle valve 22 is controlled to the closing side (determination in step S69 is YES), the closing speed of the throttle valve 22 is increased and the reduction rate of the intake air amount is increased as the catalyst temperature is higher. Further particularly, if the fuel cut is in progress and the catalyst protection flag is 1, and if the throttle valve 22 is controlled to the opening side (determination in step S71 is YES), the opening speed of the throttle valve 22 is slowed and the increase rate of the intake air amount is slowed as the catalyst temperature is higher.

### (Non-FC-time throttle control)

Next, the non-FC-time throttle control of step S100 will be described using the flowchart in FIG. 7.

When non-FC-time throttle control is started, the PCM 100 may first calculate a target torque that is a target value for the engine torque (step S101). For example, the PCM 100 calculates the target torque based on the accelerator opening degree detected by the accelerator sensor SN7 and the vehicle speed detected by the vehicle speed sensor SN9, and the like.

Next, the PCM 100 may set a target intake air amount that is a target value of the intake air amount (step S102). For example, PCM 100 sets the target intake air amount based on the target torque and the engine rotation speed detected by crank angle sensor SN1, and the like.

Next, the PCM 100 may determine whether the catalyst protection flag is 1 (step S103). If the determination in step S103 is YES and the catalyst protection flag is 1, the PCM 100 may determine whether the target intake air amount set in step S102 is larger than the upper limit intake air amount (step S104). The upper limit intake air amount may be preset and stored in the PCM 100.

If the determination in step S104 is YES and the target intake air amount is larger than the upper limit intake air amount, the PCM 100 may reset the target intake air amount to the upper limit intake air amount (step S105). In other words, the target intake air amount is changed from the value set in step S102 to the upper limit intake air amount. After step S105, the PCM 100 proceeds to step S106.

Contrarily, if the determination in step S103 is NO and the catalyst protection flag is 0, or if the target intake air amount set in step S102 is equal to or smaller than the upper limit intake air amount, the PCM 100 may proceed to step S106 without implementing step S105, that is, while maintaining the target intake air amount at the value set in step S102.

In step S106, the PCM 100 opens and/or closes the throttle valve 22 so as to achieve the target intake air amount set in step S102, or the target intake air amount reset to the upper limit intake air amount in step S105. With the implementation of step S106, the non-FC-time throttle control ends.

As described above, when fuel cut is not being implemented and the catalyst protection flag is 1, the PCM 100 implements control to restrict the target intake air amount, and therefore the intake air amount, to below the upper limit intake air amount, as a part of the catalyst protection control.

### (Non-FC-time fuel injection control)

Next, the non-FC-time fuel injection control of step S200 will be described. In the following, the end of the fuel cut and the resumption of fuel supply to the combustion chamber 5 may be referred to as fuel recovery, as appropriate.

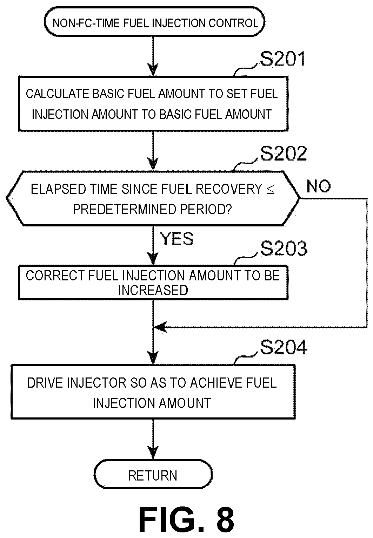

In the fuel cut, fuel supply to the combustion chamber 5 stops, and thereby the exhaust gas becomes almost air. As a result, oxygen is absorbed in the catalyst device 31 during the fuel cut. If the amount of oxygen absorbed in the catalyst device 31 increases, the air-fuel ratio in the catalyst device 31 after fuel recovery becomes leaner than the stoichiometric air-fuel ratio, and thereby the NOx purification performance decreases. Therefore, in this embodiment, a fuel amount increase control is implemented to increase the fuel amount to be supplied to the combustion chamber 5 after the fuel recovery, to supply unburned fuel to the exhaust passage 30 and the catalyst device 31, so that the oxygen absorbed in the catalyst device 31 is consumed by reaction with the unburned fuel. The non-FC-time fuel injection control, including this fuel amount increase control, will be described using the flowchart in FIG. 8.

When non-FC-time fuel injection control is started, the PCM 100 may first calculate the basic fuel amount that is the basic amount of fuel to be supplied to the combustion chamber 5, and may set this as the fuel injection amount (step S201). PCM 100 may calculate a basic fuel amount that is the amount of fuel that brings the air-fuel ratio of the air-fuel mixture in the combustion chamber 5 close to a value of the stoichiometric air-fuel ratio, based on the target intake air amount set in step S102 or step S105 of non-FC-time fuel throttle control and/or the engine rotation speed detected by crank angle sensor SN1.

Then, the PCM 100 may determine whether the elapsed period after the fuel recovery is performed is less than or equal to a predetermined period (S202). Step S202 is a step for determining whether the air-fuel ratio in the catalyst device 31, which has become leaner than the stoichiometric air-fuel ratio with the implementation of the fuel cut, is maintained at a lean state, and the predetermined period is the period after the fuel recovery is performed until the air-fuel ratio in the catalyst device 31 becomes the stoichiometric air-fuel ratio or richer than that.

Here, if the air-fuel ratio in the catalyst device 31 becomes the stoichiometric air-fuel ratio or richer than the stoichiometric air-fuel ratio from a state leaner than the stoichiometric air-fuel ratio, the RO2 output voltage rises above a predetermined determination voltage that is lower than the above-described stoichiometric voltage. For this reason, in this embodiment, the period after the fuel recovery is performed until the RO2 output voltage exceeds the determination voltage is set to a predetermined period. In other words, in step S202, the PCM 100 determines whether the RO2 output voltage has exceeded the determination voltage after the fuel recovery. The determination voltage may be preset and stored in the PCM 100.

If the determination in step S202 is NO, the elapsed period after the fuel recovery is performed has exceeded the predetermined time, and the air-fuel ratio in the catalyst device 31 has become stoichiometric air-fuel ratio or richer than that, the PCM 100 may not correct the fuel injection amount to be increased, which is described below, and proceed to step S204 while maintaining the fuel injection amount at the value set in step S201.

Contrarily, if the determination in step S202 is YES, the elapsed period after the fuel recovery is performed is equal to or less than a predetermined time, and the air-fuel ratio in the catalyst device 31 is leaner than the stoichiometric air-fuel ratio, the PCM 100 may correct the fuel injection amount to be increased (step S203). For example, in step S203, the PCM 100 resets the fuel injection amount to a value larger than the basic injection amount calculated in step S201. Particularly, PCM 100 may reset the fuel injection amount to a value obtained by adding a preset amount to the fuel injection amount set in step S201.

As described above, the fuel injection amount set in step S201 is an amount that brings the air-fuel ratio of the air-fuel mixture in the combustion chamber 5 close to the stoichiometric air-fuel ratio. Therefore, when the fuel injection amount is corrected to be increased, the air-fuel ratio of the air-fuel mixture in the combustion chamber 5 becomes richer than the stoichiometric air-fuel ratio. After step S203, the PCM 100 may proceed to step S204.

In step S204, the PCM 100 may drive the injector 11 so as to achieve the fuel injection amount set in step S201 or the fuel injection amount reset in step S203. The non-FC-time fuel injection control may end when step S204 is implemented.

As described above, the fuel increase control is implemented after the fuel recovery, and thereby the oxygen absorbed in the catalyst device 31 with the implementation of the fuel cut is consumed, returning the air-fuel ratio of the catalyst device 31 to the stoichiometric air-fuel ratio or to a ratio richer than the stoichiometric air-fuel ratio.

Returning to the flowchart of FIG. 6, the details of step S65 will be described. Step S65 is a step for determining whether there is any influence of the above-described fuel increase correction. For example, it takes time for the burned gas in the combustion chamber 5 to reach the catalyst device 31. As a result, after fuel increase control ends, exhaust gas containing the fuel increased by correction continues to flow into the catalyst device 31 for a while. Step S65 determines whether the inflow of exhaust gas, containing the fuel increased by correction, into the catalyst device 31 has ended.

The air-fuel mixture in the combustion chamber 5 and exhaust gas containing the fuel increased by correction are richer than the stoichiometric air-fuel ratio. Therefore, while exhaust gas containing the fuel increased by correction is flowing into the catalyst device 31, the air-fuel ratio of the exhaust gas flowing into the catalyst device 31 is richer than the stoichiometric air-fuel ratio.

In contrast, for example, after the fuel increase control ends, the fuel injection amount is changed to the basic fuel amount, and the air-fuel ratio of the air-fuel mixture in the combustion chamber 5 and exhaust gas becomes the stoichiometric air-fuel ratio. Therefore, when the inflow of the exhaust gas, containing the fuel increased by correction, into the catalyst device 31 ends, the air-fuel ratio of the exhaust gas flowing into the catalyst device 31 becomes the stoichiometric air-fuel ratio.

Particularly, if the fuel cut is implemented during fuel increase control, the air-fuel ratio of the air-fuel mixture in the combustion chamber 5 and exhaust gas becomes leaner than the stoichiometric air-fuel ratio when fuel increase control ends. Therefore, when the exhaust gas containing the fuel increased by correction stops flowing into the catalyst device 31, the air-fuel ratio of the exhaust gas flowing into the catalyst device 31 becomes leaner than the stoichiometric air-fuel ratio.

The front O2 sensor SN5 may be provided immediately upstream of the catalyst device 31, and the front air-fuel ratio detected by the front O2 sensor SN5 is approximately the same as the air-fuel ratio of the exhaust gas flowing into the catalyst device 31. Thus, in this embodiment, in step S65, the PCM 100 determines NO in step S65 until the front air-fuel ratio detected by the front O2 sensor SN5 becomes the stoichiometric air-fuel ratio or leaner after the fuel amount increase control ends, and the PCM 100 determines YES in step S65 otherwise.

Then, as described above, when the determination in step S65 is NO and the inflow of exhaust gas, containing the fuel increased by correction, into the catalyst device 31 has not ended, the PCM 100 may proceed to step S67 and set the target throttle opening degree to the normal FC opening degree. Contrarily, if the determination in step S65 is YES and the inflow of exhaust gas, containing the fuel increased by correction, into the catalyst device 31 has ended, the PCM 100 may proceed to step S65 and implement intake air amount increase control.

### (Actions, and the like)

As described above, in the above embodiment, when the catalyst protection flag is 1 and the catalyst temperature is high (basically when deterioration diagnosis of the rear O2 sensor SN6 is not being implemented and the inflow of exhaust gas containing the correction fuel into the catalyst device 31 has ended), intake air amount increase control is implemented, and the throttle opening degree and intake air amount at the time of the fuel cut are made larger than when the catalyst protection flag is 0 and the catalyst temperature is low. Therefore, by using the timing of the fuel cut, the catalyst device 31, which is at a high temperature, can be cooled by a large amount of air, and the temperature of the catalyst device 31 can be decreased early.

As described above, the time when the catalyst protection flag is 1 and the catalyst temperature is high means the time when the catalyst temperature is equal to or higher than the first determination temperature, or that the catalyst temperature has once reached or exceeded the first determination temperature but has not yet dropped below the second determination temperature. The time when the catalyst flag is 0 and the catalyst temperature is low means the time when the catalyst temperature is below the second determination temperature, or that the catalyst temperature has been equal to or higher than the second determination temperature but has not been reached the first determination temperature.

Particularly, when the throttle valve 22 is opened to increase the intake air amount with the catalyst protection flag being 1, the opening speed of the throttle valve 22 is slowed and the increase rate of the intake air amount is slowed as the catalyst temperature is higher. Further particularly, when the throttle valve 22 is closed to reduce the intake air amount at the start of the fuel cut, the closing speed of the throttle valve 22 is increased and the reduction rate of the intake air amount is increased as the catalyst temperature is higher. This makes it possible to prevent occurrence of damage such as a crack in the catalyst device 31, and appropriately cool the catalyst device 31 to prevent excessive temperature rise.

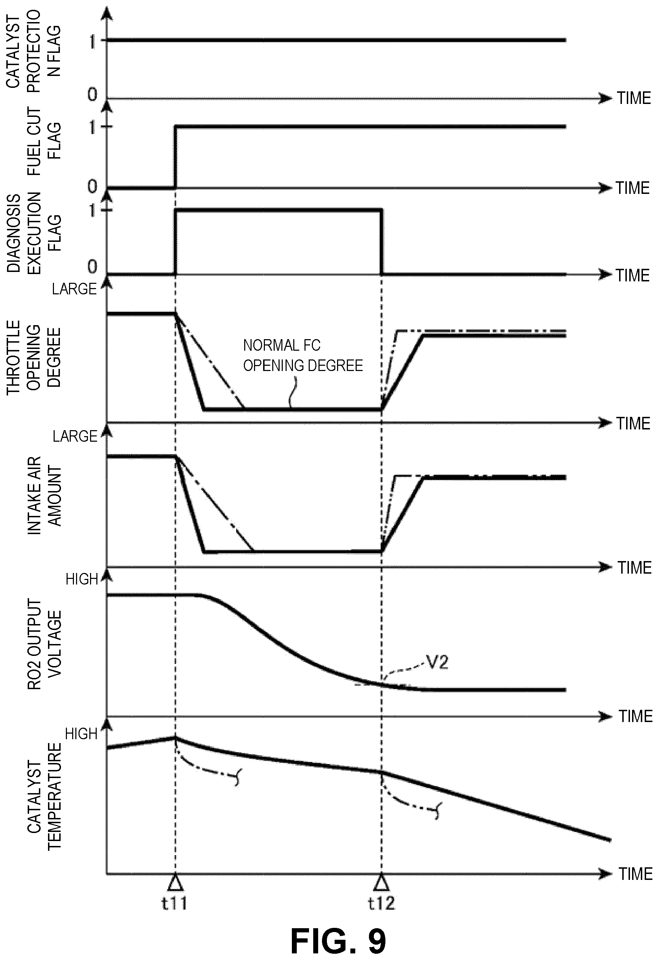

The specific description will be made using FIG. **9.** FIG. 9 is a time chart schematically showing the time change of each parameter when the fuel cut starts while the catalyst protection flag is 1 and the number of diagnoses of the rear O2 sensor SN6 has not reached the number of determinations. FIG. 9 shows, from top to bottom, charts of the catalyst protection flag, the fuel cut flag, the diagnosis execution flag, the throttle opening degree, the intake air amount, the RO2 output voltage, and the catalyst temperature.

In the example of FIG. 9, at time t11, the fuel cut starts, and the deterioration diagnosis of the rear O2 sensor SN6 starts and the diagnosis execution flag is changed from 0 to 1. As described above, when the diagnosis execution flag is 1 and the deterioration diagnosis of the rear O2 sensor SN6 is implemented, the throttle opening degree is set to the normal FC opening degree. As described above, the throttle opening degree in the non-fuel cut is larger than the normal FC opening degree. Therefore, from time t11 onward, the throttle valve 22 is normally controlled to closing side towards the normal FC opening degree, and the intake air amount decreases.

In the example of FIG. 9, as the RO2 output voltage drops to the second voltage V2 at time t12, the deterioration diagnosis of the rear O2 sensor SN6 ends. When the deterioration diagnosis of the rear O2 sensor SN6 ends, the intake air amount increase control is started. Accordingly, from time t12 onward, the throttle opening degree is made larger (on the opening side) than the normal FC opening degree, and the intake air amount increases.

In the chart of the throttle opening degree, the intake air amount, and the catalyst temperature in FIG. 9, the one-dot chain line indicates the time change of each parameter when the closing speed of the throttle valve 22 is slower than the solid line. In the chart of the throttle opening degree, the intake air amount, and the catalyst temperature in FIG. 9, the two-dot chain line indicates the time change of each parameter when the opening speed of the throttle valve 22 is faster than the solid line.

As shown by the one-dot chain line in FIG. 9, if the closing speed of the throttle valve 22 is slow, the intake air amount is maintained high after time t11. Therefore, in this case, a large amount of air flows into the catalyst device 31 immediately after fuel cut starts at time t11. When the temperature of the catalyst device 31 is high, the difference from the air temperature is large. Therefore, if the closing speed of the throttle valve 22 is slow, a large amount of low-temperature air flows into the catalyst device 31 while the temperature of the catalyst device 31 is high, causing the catalyst temperature to drop significantly.

In contrast, as shown by the solid line in FIG. 9, if the closing speed of the throttle valve 22 is fast, the intake air amount decreases early after time t11. Therefore, if the closing speed of the throttle valve 22 is fast, the amount of air flowing into the catalyst device 31 is kept small immediately after the fuel cut starts at time t11, so that the catalyst temperature reduces gradually.

In this way, if the closing speed of the throttle valve 22 is slowed when the temperature of the catalyst device 31 is high, the catalyst temperature drops significantly, and if the closing speed of the throttle valve 22 is increased when the temperature of the catalyst device 31 is high, the catalyst temperature drops gradually. Here, if the reduction amount of the catalyst temperature is excessively large, a damage such as a crack is highly likely to occur in the catalyst device 31.

In contrast, in this embodiment, when the fuel cut is implemented while the catalyst protection flag is 1, that is, the catalyst temperature is high, and when the throttle valve 22 is controlled to the closing side to reduce the intake air amount, the closing speed of the throttle valve 22 is increased and the reduction rate of the intake air amount is increased as the catalyst temperature is higher. This makes it possible to prevent a large amount of low-temperature air from flowing into the catalyst device 31 while the catalyst temperature is high. This then makes it possible to prevent the reduction amount of the catalyst temperature from being excessively large, and therefore prevent damage such as cracks from occurring in the catalyst device 31. In contrast, when the catalyst temperature is low and the catalyst device 31 is unlikely to be damaged, a large amount of low-temperature air is allowed to flow into the catalyst device 31, making it possible to cool it early.

Also, as shown by the two-dot chain line in FIG. 9, if the opening speed of the throttle valve 22 is fast, the intake air amount increases early after time t12, and a large amount of low-temperature air flows into the catalyst device 31 all at once. As described above, when a large amount of low-temperature air flows into the catalyst device 31 while the temperature of the catalyst device 31 is high, the catalyst temperature drops significantly. Therefore, in this case, as shown by the two-dot chain line, the catalyst temperature drops sharply after time t12. In contrast, as shown by the solid line in FIG. 9, if the opening speed of the throttle valve 22 is slow, the intake air amount increases gradually after time t12, and the catalyst temperature reduces relatively gradually.

In this way, if the opening speed of the throttle valve 22 is increased when the temperature of the catalyst device 31 is high, the catalyst temperature drops sharply, and if the opening speed of the throttle valve 22 is slowed when the temperature of the catalyst device 31 is high, the catalyst temperature drops gradually. Here, if the reduction amount of the catalyst temperature is excessively large, a damage such as a crack is highly likely to occur in the catalyst device 31.

In contrast, in this embodiment, when the fuel cut is implemented while the catalyst flag is 1, that is, the catalyst temperature is high, and when the throttle valve 22 is controlled to the opening side to increase the intake air amount, the opening speed of the throttle valve 22 is slowed and the increase rate of the intake air amount is slowed as the catalyst temperature is higher. This makes it possible to prevent a large amount of low-temperature air from flowing into the catalyst device 31 while the catalyst temperature is high. This then makes it possible to prevent the reduction amount of the catalyst temperature from being excessively large, and therefore prevent damage such as cracks from occurring in the catalyst device 31. In contrast, when the catalyst temperature is low and the catalyst device 31 is unlikely to be damaged, a large amount of low-temperature air is allowed to flow into the catalyst device 31, making it possible to cool it early.

When the catalyst flag is 1 and fuel cut is being implemented, the timing for opening and closing the throttle valve 22 is not limited to the start and end of the deterioration diagnosis of the rear O2 sensor SN6, as described above. For example, the throttle valve 22 is also closed and opened when the inflow of exhaust gas containing correction fuel into the catalyst device 31 ends while the fuel cut is implemented.

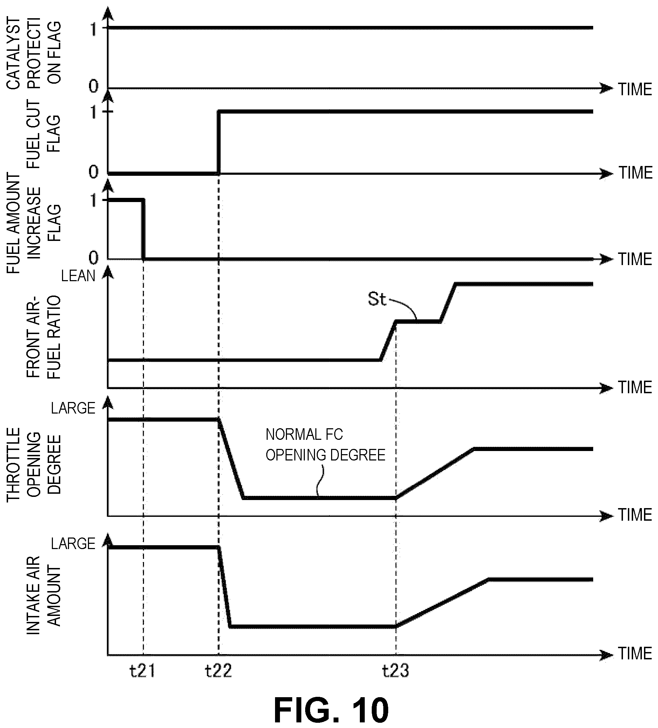

FIG. 10 is a time chart schematically showing a diagram of the time change of each parameter when the inflow of exhaust gas containing the correction fuel into the catalyst device 31 ends while the fuel cut is implemented. For example, FIG. 10 is a time chart when the fuel cut starts in a state in which the catalyst protection flag is 1 and the inflow of exhaust gas containing correction fuel into the catalyst device 31 has not ended.

FIG. 10 shows, from top to bottom, charts of the catalyst protection flag, the fuel cut flag, the fuel amount increase flag, the front air-fuel ratio, the throttle opening degree, and the intake air amount. The fuel amount increase flag is a flag that is 1 when the fuel injection amount is corrected to be increased and that is 0 at other times.

In the example of FIG. 10, the increase correction of the fuel injection amount ends at time t21. Fuel cut starts at time t22 after time t21. Particularly, at time t23 after time t22, the front air-fuel ratio reaches the stoichiometric air-fuel ratio (St), and the inflow of exhaust gas, containing the fuel increased by correction, into the catalyst device 31 ends. In this way, if the fuel cut starts before the inflow of exhaust gas, containing the fuel increased by correction, into the catalyst device 31 ends, the intake air amount increase control is not implemented when the fuel cut starts, and the throttle valve 22 is closed toward the normal FC opening degree when the fuel cut starts (time t21). Then, when the inflow of exhaust gas, containing the fuel increased by correction, into the catalyst device 31 ends (time t23), the intake air amount increase control is started and the throttle valve 22 is controlled to opening side from the normal FC opening degree.

Accordingly, in the example of FIG. 10, at time t21, the closing speed of the throttle valve 22 is increased and the reduction rate of the intake air amount is increased as the catalyst temperature is higher. Particularly, at time t23, the opening speed of the throttle valve 22 is slowed and the increase rate of the intake air amount is slowed as the catalyst temperature is higher.

According to this embodiment, control is implemented in this way, and thereby, if the inflow of exhaust gas containing correction fuel into the catalyst device 31 ends while the fuel cut is implemented, the throttle valve 22 and therefore the intake air amount can be appropriately controlled in accordance with the catalyst temperature, and the temperature of the catalyst device 31 can be prevented from becoming excessively high while preventing damage to the catalyst device 31. Note that, in the example of FIG. 10, since the fuel cut is started after increase correction of the fuel injection amount ends and the air-fuel mixture in the combustion chamber 5 is then controlled to the stoichiometric air-fuel ratio for a while, the front air-fuel ratio is close to the stoichiometric air-fuel ratio for a while after time t23, and then becomes leaner than the stoichiometric air-fuel ratio.

Particularly, in the above embodiment, when the catalyst protection flag is 1 and the catalyst temperature is high, the intake air amount is prevented from exceeding the upper limit intake air amount while fuel cut is not being implemented, allowing the combustion energy generated in the combustion chamber to be kept small. This makes it possible to more reliably prevent the catalyst temperature from becoming excessively high.

However, if opportunities to restrict the intake air amount increases, opportunities to restrict engine output increases, which may deteriorate driving performance of the vehicle. For this, in the above embodiment, the catalyst device 31 is cooled when the fuel cut is implemented to prevent its excessive temperature rise. This makes it possible to reduce the opportunities for the catalyst temperature to become high when the fuel cut is not implemented, and prevent deterioration of driving performance.

### (Modified example)

The above embodiment is described with the case in which increasing and decreasing the opening degree of the throttle valve 22 increases and decreases the intake air amount when the intake air amount increase control is implemented and when the control for restricting the intake air amount to an upper limit intake air amount is implemented, but the device for increasing and decreasing the intake air amount is not limited to the throttle valve 22. For example, a variable valve mechanism capable of changing the opening and closing timings of the intake valve 8 may be provided in the device that drives the intake valve 8 to increase and decrease the intake air amount by changing the opening and closing timings of the intake valve 8.

The above embodiment is described with the case in which the abnormality diagnosis of the engine system E is implementation of a deterioration diagnosis of the rear O2 sensor SN6, but instead of or in addition to the deterioration diagnosis of the rear O2 sensor SN6, diagnosis of other devices may be implemented as an abnormality diagnosis. Also when an abnormality diagnosis other than the deterioration diagnosis of the rear O2 sensor SN6 is implemented, the abnormality diagnosis may be configured to take priority over the intake air volume increase control during the fuel cut. For example, there may be a configuration such that a diagnosis of whether the EGR device 40 has failed is implemented during the fuel cut, the intake air volume increase control is prohibited from being implemented and the diagnosis is executed when the fuel cut starts, and the intake air volume increase control is started after the diagnosis ends.

The above embodiment is described with the case in which the catalyst protection control (intake air amount increase control and control to restrict he intake air amount to an upper limit intake air amount) is implemented when the catalyst temperature is equal to or higher than the first determination temperature, and when the catalyst temperature has reached or exceeded the first determination temperature but has not yet dropped to the second determination temperature or lower, but the condition that the catalyst temperature has reached or exceeded the first determination temperature but has not yet dropped to the second determination temperature or lower may be excluded from the conditions for implementing the catalyst protection control.

Particularly, the above embodiment is described with the case in which the intake air amount increase control is started after the deterioration diagnosis of the rear O2 sensor SN6 ends in one fuel cut, but there may be a configuration such that the intake air amount increase control is prohibited during a fuel cut, in which the deterioration diagnosis of the rear O2 sensor SN6 has been implemented, until the fuel cut ends.

The above embodiment is described with the case in which the catalyst device 31 includes a three-way catalyst as a catalyst, but the catalyst included in the catalyst device 31 is not limited to this. In addition, the above embodiment is described with the case in which the injector 11 is a side-injection type, but the injection type of the injector 11 is not limited to this. In addition, the description is made on the case in which the fuel is directly injected into the combustion chamber 5, but the injection form of the fuel is not limited to this. In addition, the specific structure of the engine body 1, such as the number of cylinders, is not limited to the above.

### [Reference Signs List]

1 engine body
5 combustion chamber
11 injector (fuel supply device)
20 intake passage
22 throttle valve (intake air amount adjustment device)
30 exhaust passage
31 catalyst device
91 accelerator pedal
100 PCM (control unit, catalyst temperature obtaining device)
SN7 accelerator sensor (accelerator opening degree detection device)

## Claims

1. An engine system (E) provided in a vehicle including an accelerator pedal (91), the engine system (E) comprising:
an engine body (1) including a combustion chamber (5);
an exhaust passage (30) and an intake passage (20) each connected to the engine body (1);
a fuel supply device (11) that is configured to supply fuel to the combustion chamber (5);
an intake air amount adjustment device (22) that is configured to adjust an intake air amount that is an amount of air drawn into the combustion chamber (5);
a catalyst device (31) provided in the exhaust passage (30) to purify exhaust gas;
a catalyst temperature obtaining device that is configured to obtain a catalyst temperature that is a temperature of the catalyst device (31);
an accelerator opening degree detection device (SN7) that is configured to detect an accelerator opening degree, the accelerator opening degree being an opening degree of the accelerator pedal (91); and
a control unit (100) that is configured to control the fuel supply device (11) and the intake air amount adjustment device (22),
wherein
when the accelerator opening degree detected by the accelerator opening degree detection device (SN7) is equal to or smaller than a predetermined accelerator determination opening degree, the control unit (100) is configured to implement a fuel cut to stop fuel injection by the fuel supply device (11), and
when the fuel cut is implemented while the catalyst temperature obtained by the catalyst temperature obtaining device is equal to or higher than a predetermined determination temperature,
the control unit (100) is configured to implement an intake air amount increase control to control the intake air amount adjustment device (22) so that the intake air amount is increased, and
the control unit (100) is configured to control the intake air amount adjustment device (22) so that an increase rate of the intake air amount is slower as the catalyst temperature becomes higher.

2. The engine system (E) according to claim 1, wherein
the control unit (100) is configured to implement the intake air amount increase control to control the intake air amount adjustment device (22) so that an intake air amount when the catalyst temperature is equal to or higher than the determination temperature is larger than an intake air amount when the catalyst temperature is lower than the determination temperature.

3. The engine system (E) according to claim 1 or 2, wherein
at a time of implementing the fuel cut, the control unit (100) is configured to prohibit the intake air amount increase control when a predetermined prohibiting condition is met, and the control unit (100) is configured to start the intake air amount increase control to increase the intake air amount when the prohibiting condition is not met.

4. The engine system (E) according to any one of the preceding claims, wherein
at a time of implementing the fuel cut, the control unit (100) is configured to control the intake air amount adjustment device (22) when decreasing the intake air amount so that a reduction rate of the intake air amount is faster as the catalyst temperature becomes higher.

5. The engine system (E) of an engine according to any one of the preceding claims, wherein
at a time of not implementing the fuel cut, the control unit (100) is configured to restrict the intake air amount to a predetermined upper limit intake air amount or less by the intake air amount adjustment device (22) when the catalyst temperature is equal to or higher than the determination temperature.

6. The engine system (E) according to any one of the preceding claims, wherein
the intake air amount adjustment device (22) is a throttle valve that is provided in the intake passage (20), and configured to open and/or close the intake passage (20).

7. A vehicle comprising:
an accelerator pedal (91); and
the engine system (E) according to any one of the preceding claims.

8. A control method of an engine system (E) provided in a vehicle including an accelerator pedal (91), the engine system (E) comprising an engine body (1) including a combustion chamber (5), an exhaust passage (30) and an intake passage (20) each connected to the engine body (1), a fuel supply device (11) that is configured to supply fuel to the combustion chamber (5), an intake air amount adjustment device (22) that is configured to adjust an intake air amount that is an amount of air drawn into the combustion chamber (5), a catalyst device (31) provided in the exhaust passage (30) to purify exhaust gas, the control method comprising:
obtaining a catalyst temperature that is a temperature of the catalyst device (31);
detecting an accelerator opening degree, the accelerator opening degree being an opening degree of the accelerator pedal (91);
when the accelerator opening degree detected by the accelerator opening degree detection device (SN7) is equal to or smaller than a predetermined accelerator determination opening degree, implementing a fuel cut to stop fuel injection by the fuel supply device (11); and
when the fuel cut is implemented while the catalyst temperature obtained by the catalyst temperature obtaining device is equal to or higher than a predetermined determination temperature,
implementing an intake air amount increase control to control the intake air amount adjustment device (22) so that the intake air amount is increased, and
controlling the intake air amount adjustment device (22) so that an increase rate of the intake air amount is slower as the catalyst temperature becomes higher.

9. The control method according to claim 8, wherein
the intake air amount increase control is implemented to control the intake air amount adjustment device (22) so that an intake air amount when the catalyst temperature is equal to or higher than the determination temperature is larger than an intake air amount when the catalyst temperature is lower than the determination temperature.

10. The control method according to claim 8 or 9, wherein
at a time of implementing the fuel cut, the intake air amount increase control is prohibited when a predetermined prohibiting condition is met, and the intake air amount increase control is started to increase the intake air amount when the prohibiting condition is not met.

11. The control method according to any one of claims 8 to 10, wherein
at a time of implementing the fuel cut, the intake air amount adjustment device (22) is controlled when decreasing the intake air amount so that a reduction rate of the intake air amount is faster as the catalyst temperature becomes higher.

12. The control method according to any one of claims 8 to 11, wherein
at a time of not implementing the fuel cut, the intake air amount is restricted to a predetermined upper limit intake air amount or less by the intake air amount adjustment device (22) when the catalyst temperature is equal to or higher than the determination temperature.

13. The control method according to any one of claims 8 to 12, wherein
the intake air amount adjustment device (22) is a throttle valve that is provided in the intake passage (20), and configured to open and/or close the intake passage (20).

14. A control unit (100) configured to perform the method of any one of claims 8 to 13.

15. A computer program product configured to perform the method of any one of claims 8 to 13 when executed by a control unit (100).
